# EUROPEAN PATENT APPLICATION

(11) **EP 4 835 796 A1**
(43) Date of publication of application: **04.11.2026**
(21) Application number: 26171396.0
(22) Date of filing: 09.04.2026
(51) Int. Cl.: G06Q 30/0601

(54) **ITEM LISTING MODIFICATIONS USING A GRAPH NEURAL NETWORK (GNN) TRAINED ON CANONICALIZED KNOWLEDGE GRAPHS**

(30) Priority: 01.05.2025 US 202519196554
(71) Applicant: eBay Inc., San Jose, CA 95125 (US)
(72) Inventor: AGARWAL, Abhishek, San Jose, 95125 (US); NAVALPAKKAM RAJAGOPALAN, Shrivatsan, San Jose, 95125 (US); PHEGADE, Vinay, San Jose, 95125 (US)
(74) Representative: Müller-Boré & Partner Patentanwälte PartG mbB

(57) **Abstract**

The technology relates to modifying and generating item listings accessible via a network using a graph neural network (GNN) trained on a canonicalized item graph. A canonicalized item graph is generated from item listings having nodes representing categorized items and edges showing relationships between attributes of the categorized items. A GNN is trained on the canonicalized item graph, which is then used to process text, images, video, or other content in new item listings and recommend modifications. Based on the GNN's recommended modifications, a final item listing is generated.

## Description

### BACKGROUND

Items are listed online through various websites. For example, sellers create listings by providing descriptions, images, and prices for their products, often using templates provided by a web host. These listings are then made searchable and accessible to potential buyers, who can browse and purchase items directly through the platform.

### SUMMARY

At a high level, the technology generally relates to modifying item listings and generating final item listings for items accessible via a network using a graph neural network (GNN) trained on a canonicalized item graph. An example method begins by generating a canonicalized item graph from item listings populated with item listing data. The graph includes nodes that correspond to categorized items and edges connecting the nodes to represent relationships between attributes of the items.

A GNN is trained on the canonicalized item graph to generate a trained GNN. The GNN learns to recognize patterns and relationships within the item attributes through iterative updates and optimization. The trained GNN is then employed to process new item listings, including synthetic item listings that are generated at least in part by another model, and to identify modifications to text, images, video, or other content therein.

Based on the recommended modification by the GNN, a final item listing can be generated. The final item listing may include the modification if the modification is selected for inclusion or omit the modification if the modification is not selected for inclusion, for example, by meeting an accuracy threshold, receiving an input indicating a selection, or other like selection method.

This summary is intended to introduce a selection of concepts in a simplified form that is further described in the detailed description section of this disclosure. The summary is not intended to identify key or essential features of the claimed subject matter, nor is it intended to be an aid in determining the scope of the claimed subject matter. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 illustrates an example operating environment in which the technology may be employed, in accordance with an aspect described herein;
FIG. 2 illustrates an example item listing, in accordance with an aspect described herein;
FIG. 3A and FIG. 3B provide an example illustration of generating a canonicalized item graph, in accordance with an aspect described herein;
FIG. 4 illustrates an example in which a canonicalized item graph is used to train a GNN, in accordance with an aspect described herein;
FIG. 5 illustrates an example generation of a synthetic item listing, in accordance with an aspect described herein;
FIG. 6 illustrates an example in which a final item listing is generated from a synthetic item listing using a GNN, in accordance with an aspect described herein;
FIG. 7 illustrates an example in which a final item listing is generated from a new item listing using a GNN, in accordance with an aspect described herein;
FIG. 8 illustrates an example method for generating a final item listing, in accordance with an aspect described herein;
FIG. 9 illustrates an example method in which a modification is recommended for a new item listing, in accordance with an aspect described herein;
FIG. 10 illustrates an example method for generating a final item listing, in accordance with an aspect described herein; and
FIG. 11 illustrates an example computing device suitable for implementing aspects of the technology, in accordance with an aspect described herein.

### DETAILED DESCRIPTION

Errors in item listings can lead to problems for both sellers and buyers. These issues include incorrect product descriptions, pricing discrepancies, and poor quality images, which can result in customer dissatisfaction, negative reviews, and ultimately, loss of sales or returns.

Traditional neural networks often struggle with interpreting item listings and identifying errors due to the black box nature of their operations. This lack of interpretability is particularly problematic when dealing with free text in new item listings or modified item listings, where context and relationships between attributes are important. This is because existing models typically rely on exact word matches and predefined patterns, making it difficult to detect errors such as incorrect item attributes or misattributed attributes. Additionally, the models may fail to understand the context or intent behind the text, since these models often process each input independently, leading to misidentification of errors. The complexity increases with the volume and diversity of item listings.

As will be further discussed, graph neural networks (GNNs) can address many of these issues by leveraging the relational structure of data. This allows for better processing of complex relationships between item attributes. GNNs can model the connections between different attributes and item listings, making it easier to detect and correct errors such as misattributed or incorrect item attributes. GNNs provide enhanced reliability of error detection and correction in item listings relative to other types of traditional neural networks. Another advantage of GNNs is that their ability to scale to large volumes of data is greater than those of existing models.

The use of GNNs for error detection and correction in item listings is still a relatively unexplored area. While GNNs have shown promise in enhancing personalized product recommendations and addressing complex relationships between users and products, their application in identifying and rectifying listing errors remains unexplored. It is generally not performed in search engine and ecommerce fields to use GNNs to determine whether a modification made to a listing is an error, especially when the listing is alerted or generated by another AI (artificial intelligence) model, such as a large language model (LLM).

Moreover, using GNNs to determine listing errors can significantly improve the performance and efficiency of a computer or computer network. GNNs are designed to handle complex relational data, which allows them to process and analyze large-scale graphs more effectively than traditional models. Comparatively, this capability reduces the computational load and enhances the speed of data processing relative to existing methods, making the system more efficient when executing GNNs over other model types. Additionally, GNNs can leverage parallel processing capabilities of modern CPUs (central processing units) and GPUs (graphics processing units), optimizing resource utilization and improving overall system performance. By integrating GNNs, computers can handle more extensive datasets with greater accuracy and reliability, leading to better error detection and correction in item listings.

As will be further described, one such method of using a GNN to detect and correct potential errors in an item listing begins by generating a canonicalized item graph, which is a type of canonicalized knowledge graph. The canonicalized item graph organizes item listings into items by category, which are represented by nodes. The nodes can be connected by edges that illustrate relationships between different attributes of the item listings, such as titles, descriptions, prices, conditions, categories, and item features. This structured graph serves as the foundation for training a GNN, which learns to understand and predict patterns within the item data through the relationship between item attributes in the graph.

Once the GNN is trained, it can be employed on new item listings and suggest modifications to improve their accuracy. For example, the new item listing may be created by a seller listing an item. In some aspects, the new item listing is at least partially generated by another AI model (i.e., a synthetic item listing) or modified by the seller. The GNN can analyze the listing in the context of the canonicalized item graph and recommend changes to attributes as an output.

After identifying a modification that could be made to the new item listing, a final item listing may be generated based on the GNN's recommended modification. For instance, the modification may be adopted such that it is included in the final item listing, while in other cases, the modification may be rejected and omitted from the final item listing. Selecting whether the final item listing is generated with the modification may be done via receiving human input or by applying an accuracy threshold for the modification.

It will be realized that the methods previously described are only examples that can be practiced from the description that follows, and the examples are provided to more easily understand the technology and recognize its benefits. Additional examples are now described with reference to the figures.

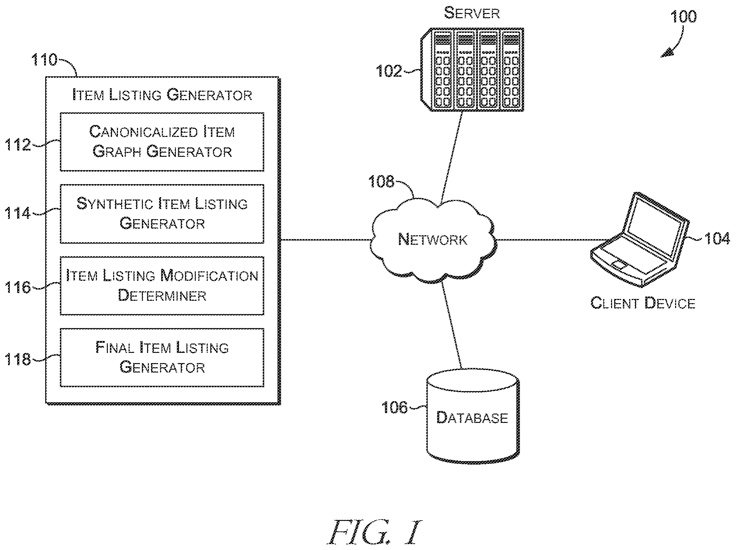

With reference now to FIG. 1, an example operating environment 100 is provided having item listing generator 110, which may be generally used to recommend modifications to potential errors in an item listing and to generate a final item listing based on the modification. To do so, the example item listing generator 110 illustrated employs canonicalized item graph generator 112, synthetic item listing generator 114, item listing modification determiner 116, and final item listing generator 118.

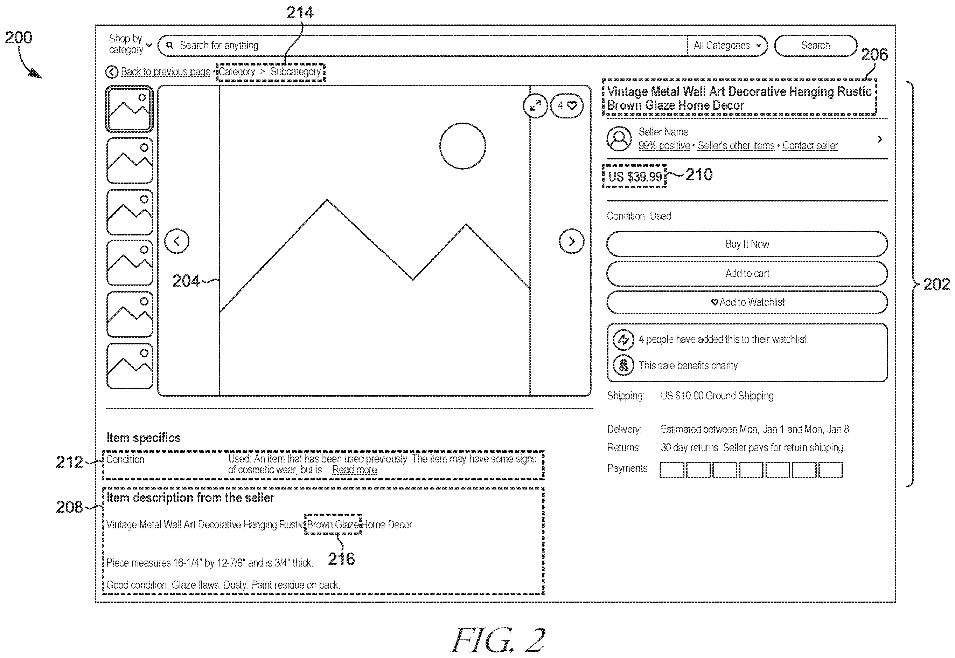

In general, canonicalized item graph generator 112 may be employed to generate a canonicalized item graph for training a GNN. A canonicalized item graph can be generated from item listings. As illustrated in FIG. 2, an item listing, such as item listing 200, may include item listing data 202 which can be used to generate the canonicalized item graph. Item listing data 202 can include any information or data corresponding to item 204 for which the listing has been generated, including attributes of the item listing. An attribute may be any descriptive characteristic or feature about the item in the item listing. Examples of item listing attributes include attribute (title) 206, attribute (description) 208, attribute (price) 210, attribute (condition) 212, attribute (category) 214, and attribute (item feature) 216.

Nodes of the canonicalized item graph can be generated to represent a categorized item, such as item 204. In an aspect, each categorized item is numerically represented, and the canonicalized item graph is formed of the nodes for each of the numerically represented items. For example, a single item in two different categories may be generated as two different nodes in the canonicalized item graph. For example, the canonicalized item graph may comprise a first node for an item in a first category and a second node for the same item in a second category that is different from the first category. In an aspect, each node is associated with one or more attributes from item listings for the categorized item. In another aspect, a node is generated from a category (e.g., a node representing a lowest level category, which is the lowest level of category with no subcategories under it). In another aspect, nodes may be generated for individual items.

Edges can be defined between the nodes according to the relationships between the attributes. For instance, two nodes may be connected by an edge where the first node has a first attribute that is the same as the second attribute of the second node. In other aspects, nodes may be connected based on other defined relationships between attributes. For instance, attributes may be related by similarity, where two attributes share a common characteristic but are not entirely the same. In another example, attributes are related when they are complementary, such that one item is enhanced or completed by another item based on its attribute, e.g., an attribute of a digital camera and an attribute of a memory card for use with the digital camera. In another example, attributes may have a categorical relationship, such as how "medium" may be in the same category of "size" as "large" in the context of clothing. Other relationships between attributes may be used.

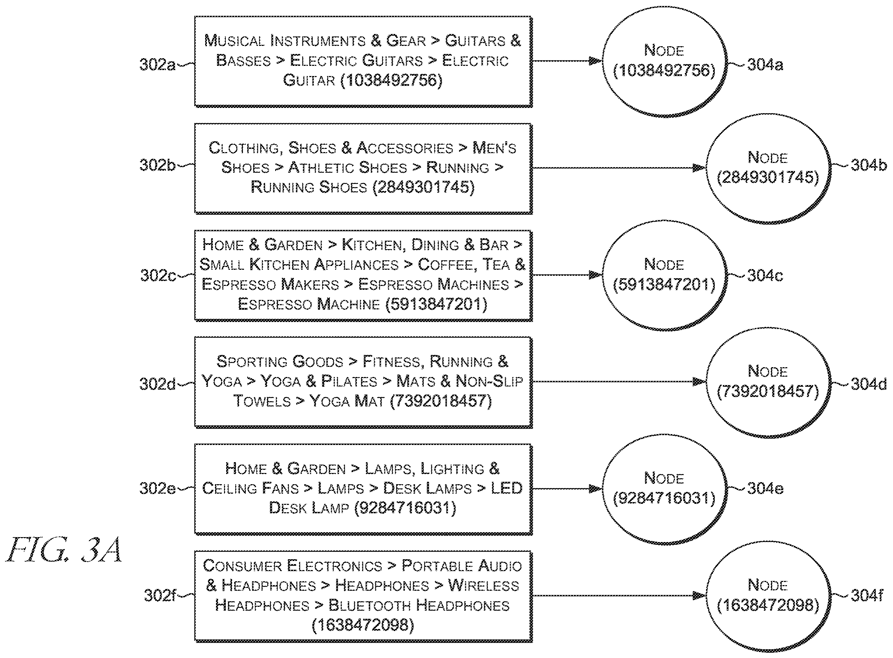

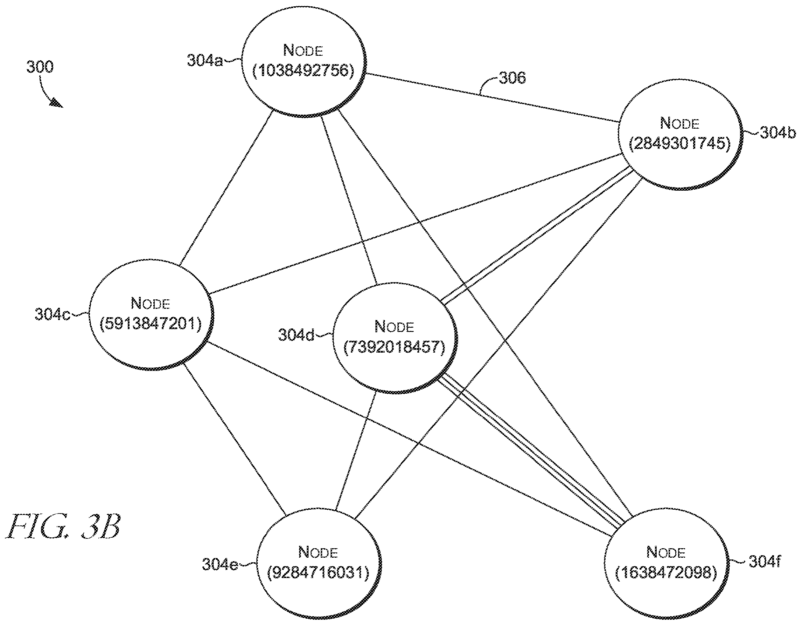

FIG. 3A and FIG. 3B are provided to illustrate an example in which canonicalized item graph generator 112 can be employed to generate a canonicalized item graph, such as canonicalized item graph 300. As illustrated in the example of FIG. 3A, nodes can be generated for categorized items. For instance, item 302a is a categorized item of an electric guitar within the category of "Musical Instruments & Gear > Guitars & Basses > Electric Guitars." In an aspect, the item 302a can have a numerical representation, e.g., "10384927561." In this example, node 304a of canonicalized item graph 300 is generated for item 302a. This example continues with nodes 304b, 304c, 304d, 304e, and 304f being respectively generated for categorized items 302b, 302c, 302d, 302e, and 302f.

As illustrated in the example shown by FIG. 3B, the nodes generated at FIG. 3A can be used for generating canonicalized item graph 300 by connecting the nodes with edges, as previously described. For instance, nodes having related attributes can be connected by edges. While FIG. 3B shows a number of illustrative edges connecting the nodes, edge 306 is indicated as an example. Edge 306 connects node 304a with node 304b based on a first attribute for node 304a being related to a second attribute for node 304b.

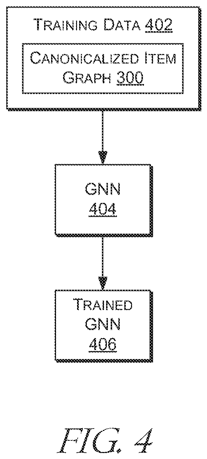

Having generated a canonicalized item graph by canonicalized item graph generator 112, a GNN can be trained using the canonicalized item graph. Thus, for instance, canonicalized item graph 300 may be used as training data 402 for GNN 404, as illustrated in FIG. 4. A GNN, such as GNN 404, may take on various types of architectures, such as graph convolutional networks (GCNs), graph attention networks (GATs), message passing neural networks (MPNNs), or other suitable architecture. In defining the GNN, a number of layers and the types of layers (e.g., convolutional or recurrent) can be selected, along with an activation function, and other hyperparameters (e.g., learning rate, batch size, number of epochs, dropout rate). Some example layers include a graph convolutional layer for performing convolution operations on graph data, such as aggregating information from neighboring nodes to update node representations; an attention layer for weighing the importance of neighboring nodes; and a message passing layer for exchanging node information between neighboring nodes. One example activation function that may be suitable includes ReLU (Rectified Linear Unit), although other linear or non-linear functions may be used.

Once the architecture is defined, the GNN is fed with the training set of the canonicalized item graph. During training, the weights of the GNN are iteratively updated. During each iteration, the graph data is passed through the network, and the output is compared to the expected results using a predefined loss function, such as a binary cross-entropy loss or a negative log-likelihood loss. The loss is minimized through backpropagation, where the weights are adjusted to reduce error. This is repeated for the defined number of epochs so that the model achieves satisfactory performance on a validation set. The trained GNN, such as GNN 404, includes the weights adjusted during training and can be applied to recommend modifications for an item listing, including identifying a missing attribute or a misattributed attribute.

In an aspect, GNN training may leverage parallel processing by distributing computation across multiple processors. This can be achieved through techniques such as data parallelism and model parallelism. For instance, data parallelism may involve partitioning the canonicalized item graph data across different processors and simultaneously processing different parts of the canonicalized item graph. Model parallelism may be used by splitting the network's layers or operations across multiple processors and concurrently executing on different parts of the model. These parallelization strategies allow GNNs to use computational resources more efficiently than prior models.

Once trained, the trained GNN can be applied to a new item listing for a new item to identify errors and recommend modifications. A new item listing for a new item generally refers to any object, product, or service that is uploaded as an item listing accessible via a network, like the internet. An item listing encompasses items that can be interacted with by users, including but not limited to items for sale, digital content, services, or any other type of listing that provides information or functionality. An item, or new item, is not restricted to commercial products and includes any listing that is made available online for user engagement. An item listing can still be considered a new item listing for a new item even when another item listing for the same item is already accessible.

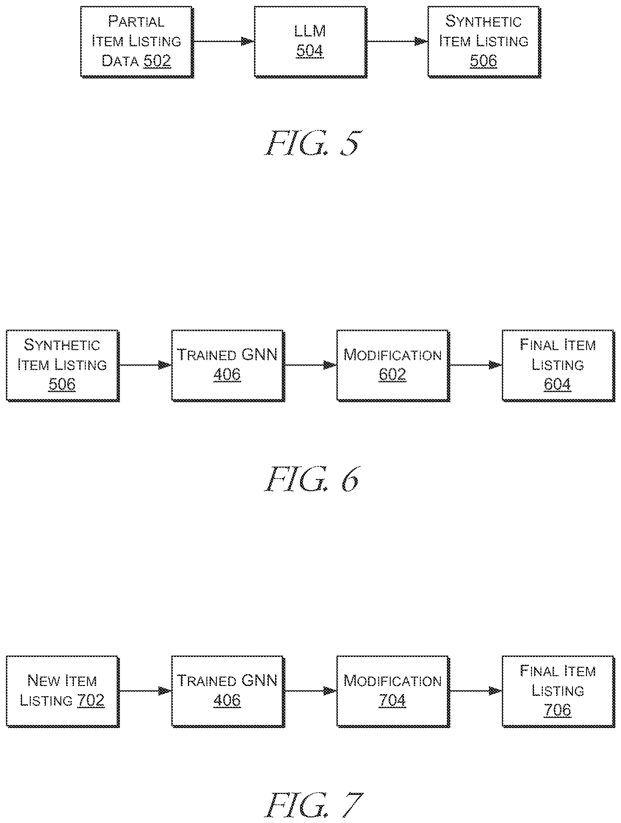

A new item listing may be generated in whole or in part from item listing data provided by an entity listing the corresponding new item on the network. In an aspect, a new item is a synthetic item listing. A synthetic item listing is an item listing that is generated at least in part using an AI model, such as an LLM. For instance, synthetic item listing generator 114 may be employed to generate the synthetic item listing. The synthetic item listing may be created using partial item listing data, which refers to incomplete information about an item that includes some, but not all, of the attributes necessary to fully describe the item. FIG. 5 illustrates an example where partial item listing data 502 is used as an input to LLM 504, which generates synthetic item listing 506 in response.

Synthetic item listing generator 114 can provide partial item listing data 502 about a new item, such as a title, description, or category, to the LLM 504, which can infer and generate additional details to complete the listing. For instance, the LLM 504 may be given an example item listing and a prompt instructing it to generate the new item listing according to the example by using partial item listing data 502. In doing so, LLM 504 accesses the partial item listing data 502 and, using patterns learned during training, predicts additional item listing data, such as missing attributes, for including in the synthetic item listing 506. Examples of LLMs that may be used include transformer-based models or recurrent neural network (RNN)-based models, which can be pre-trained on vast datasets, fine-tuned for specific tasks, or provided access to additional data to enhance their contextual understanding.

Using the trained GNN, item listing modification determiner 116 can be employed to recommend modifications to an item listing. For instance, an item listing, such as a new item listing, may be input to the trained GNN. Generally, the GNN can process the item listing (e.g., existing item listing, new item listing, synthetic item listing) by comparing attributes of the item listing data to the learned patterns within the graph. The GNN may evaluate each attribute in the context of its connections to other attributes to identify inconsistencies that may indicate errors. For example, if an item listing includes a price that is significantly different from similar items in the same category, the GNN can identify this as a potential error. As another example, the GNN may identify misattributed features, such as an incorrect color or size, by analyzing the relationships between these attributes and the overall item category. In an aspect, the GNN identifies that the inclusion of an attribute is a possible error and outputs a recommendation for another attribute to replace it. For any identified potential error, the GNN can further recommend a modification. The GNN may suggest a modification that aligns with the learned patterns in the canonicalized item graph. For example, if the GNN detects an error in price for an item, it can recommend a price adjustment modification based on similar items in the same category. In an aspect, the GNN recommends a modification by outputting an attribute not included in the input item listing based on learned patterns within the graph.

Having provided a recommended modification, final item listing generator 118 can be employed to generate the final item listing, which can be made accessible on the network. In an aspect, the final item listing includes the modification. In another aspect, the final item listing does not include the modification. Final item listing generator 118 may determine whether to include the modification based on whether the modification satistifies an accuracy threshold (i.e., meets or exceeds a predefined threshold). In an example, the trained GNN provides a confidence level corresponding to the predicted modification. The confidence level provided by the GNN may be compared to an accuracy threshold to determine whether it satisfies the accuracy threshold. If the modification satisfies the accuracy threshold, final item listing generator 118 may generate the final item listing by replacing the input attribute with the recommended output modification. If the modification does not satisfy the accuracy threshold, final item listing generator 118 may generate the final item listing that omits the modification and includes the original input attribute in the final item listing. In another aspect, the modification may be presented as a recommendation, and a selection indicating whether to include the modification in the final item listing may be received. Final item listing generator 118 may generate the final item listing according to the selection. In an aspect, an attribute identified for the item listing by the GNN can be added to the final item listing as a modification.

FIG. 6 and FIG. 7 illustrate examples in which a trained GNN may be employed to recommend modifications and generate a final item listing. As illustrated in FIG. 6, trained GNN 406 may receive synthetic item listing 506 as an input. Trained GNN 406 may process images, text, video, or other content of synthetic item listing 506 to identify any possible errors and provide a recommended modification 602 as an output. Final item listing 604 can be generated based on the modification 602. In an aspect, final item listing 604 includes modification 602 provided by trained GNN 406. In another aspect, final item listing 604 does not include modification 602. Turning to FIG. 7, trained GNN 406 may receive new item listing 702 as an input. Trained GNN 406 may process images, text, video, or other content of new item listing 702 to identify any possible errors and provide a recommended modification 704 as an output. Final item listing 706 can be generated based on the modification 704. In an aspect, final item listing 706 includes the modification 704 provided by trained GNN 406. In another aspect, final item listing 706 does not include modification 704.

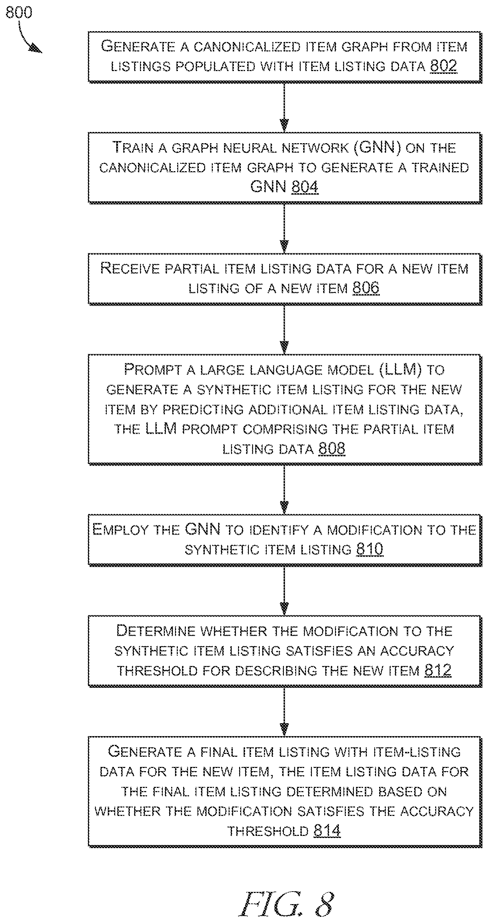

With reference now to FIGS. 8-10, block diagrams are provided respectively illustrating methods 800-1000 for recommending modifications and generating item listings using a GNN. Each block of the methods may comprise a computing process performed using any combination of hardware, firmware, or software. For instance, the methods can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few possibilities. The methods may be implemented in whole or in part by components of operating environment 100.

Referring now to FIG. 8, an example method 800 is provided for generating a final item listing using a GNN. Method 800 begins with block 802, where it generates a canonicalized item graph from item listings populated with item listing data. Generating the canonicalized item graph may include generating nodes that represent categorized items and connecting the nodes with edges based on relationships between attributes described in item listings of items corresponding to the nodes.

In block 804, method 800 trains a GNN on the canonicalized item graph to generate a trained GNN. The GNN learns to recognize patterns and relationships within the item attributes. Through iterative updates and optimization, the trained GNN is configured to analyze item listings (e.g., a new item listing or synthetic item listing) and recommend modifications for the item listings.

In block 806, method 800 involves receiving partial item listing data for a new item listing of a new item. Partial item listing data includes incomplete information about the item, such as a title, description, or category. The partial item listing data may lack some attributes necessary for a complete listing.

In block 808, method 800 prompts an LLM to generate a synthetic item listing for the new item by predicting additional item listing data. The LLM is provided with the partial item listing data. The LLM infers and generates additional item listing data to create the synthetic item listing.

In block 810, method 800 employs the trained GNN to identify a modification to the synthetic item listing. The GNN analyzes the generated listing in the context of the canonicalized item graph, evaluating the relationships and dependencies between the item attributes to output the modification.

In block 812, method 800 determines whether the modification to the synthetic item listing satisfies an accuracy threshold for describing the new item. If the modification satisfies the accuracy threshold, the modification may be used to generate a final item listing. If the modification does not satisfy the accuracy threshold, the modification may be omitted from the final item listing.

In block 814, method 800 generates the final item listing with item listing data for the new item. The item listing data for the final item listing includes the modification based on whether the modification satisfies the accuracy threshold.

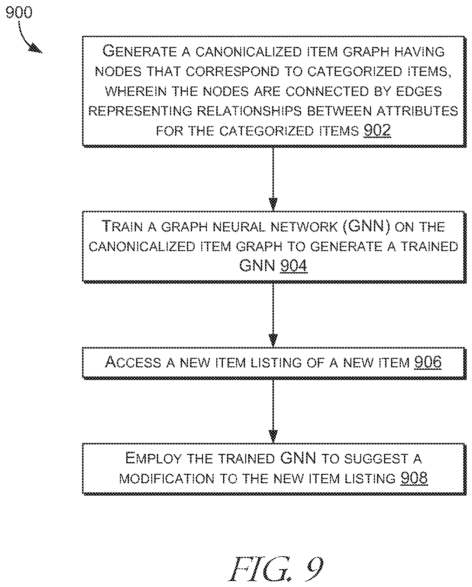

Referring now to FIG. 9, an example method 900 is provided for modifying an item listing. Method 900 begins with block 902, where it generates a canonicalized item graph having nodes that correspond to categorized items. The nodes are connected by edges representing relationships between attributes for the categorized items.

In block 904, method 900 trains a GNN on the canonicalized item graph to generate a trained GNN. The GNN learns to recognize patterns and relationships within the item attributes. Through iterative updates and optimization, the trained GNN is configured to analyze item listings (e.g., a new item listing or synthetic item listing) and recommend modifications for the item listings.

In block 906, method 900 accesses a new item listing of a new item. For instance, item listing data for the new item listing may be received by an entity listing the item listing on a network.

In block 908, method 900 employs the trained GNN to suggest a modification to the new item listing. The GNN analyzes the new item listing by comparing its attributes of the item listing data to the learned patterns and relationships within the canonicalized item graph. The GNN may output a new attribute, suggest a change of one attribute to another, change a value of an attribute (e.g., recommending a change in the price, the size of an article of clothing, the amount of memory in a mobile device, and so forth), recommend removing an attribute, or other like modification. The output may be used to modify the new item listing to generate a final item listing that can be made accessible via a network.

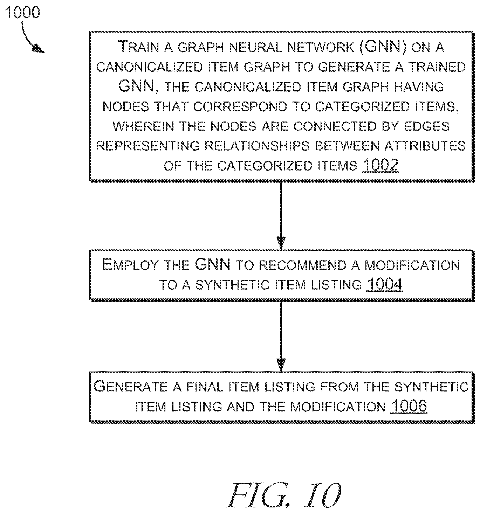

Referring now to FIG. 10, an example method 1000 is provided for generating a final item listing that may be made accessible to a network. Method 1000 begins with block 1002, where it trains a GNN on a canonicalized item graph to generate a trained GNN. The canonicalized item graph includes nodes that correspond to categorized items. The nodes are connected by edges representing relationships between attributes of the categorized items. During training, the GNN learns to recognize patterns and relationships within the item attributes. Through iterative updates and optimization, the trained GNN is configured to analyze item listings (e.g., a new item listing or synthetic item listing) and recommend modifications for the item listings.

In block 1004, method 1000 employs the trained GNN to recommend a modification to a synthetic item listing. The synthetic item listing is generated at least in part using an AI model, such as an LLM, which predicts additional item listing data based on partial item listing data. The GNN analyzes the synthetic item listing by comparing its attributes to the learned patterns and relationships within the canonicalized item graph. If the GNN detects any errors, it may recommend a modification.

In block 1006, method 1000 generates a final item listing from the synthetic item listing and the recommended modification. The final item listing may incorporate the modifications suggested by the GNN. In some aspects, the final item listing does not include the modification recommended by the GNN.

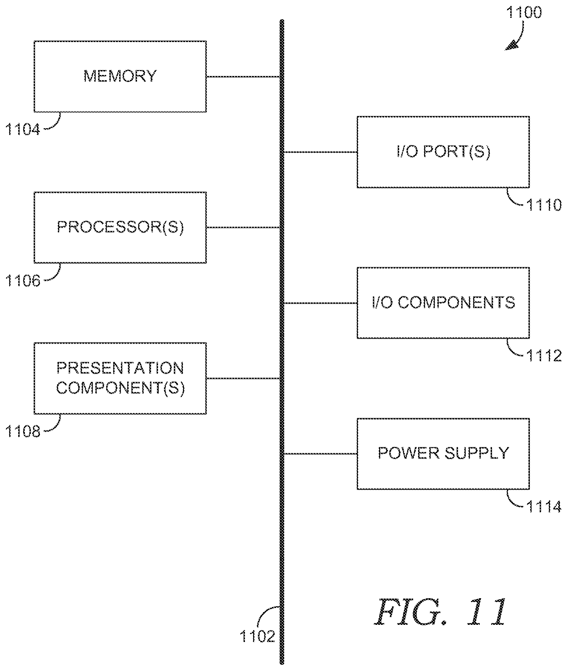

Having described an overview of some embodiments of the present technology, an example computing environment in which embodiments of the present technology may be implemented is described below in order to provide a general context for various aspects of the present technology. Referring now to FIG. 11 in particular, an example operating environment for implementing embodiments of the present technology is shown and designated generally as computing device 1100. Computing device 1100 is but one example of a suitable computing environment and is not intended to suggest any limitation as to the scope of use or functionality of the technology. Computing device 1100 should not be interpreted as having any dependency or requirement relating to any one or combination of components illustrated.

The technology may be described in the general context of computer code or machine-useable instructions, including computer-executable instructions, such as program modules, being executed by a computer or other machine, such as a cellular telephone, personal data assistant, or other handheld device. Generally, program modules, including routines, programs, objects, components, data structures, etc., refer to code that performs particular tasks or implements particular abstract data types. The technology may be practiced in a variety of system configurations, including handheld devices, consumer electronics, general-purpose computers, more specialty computing devices, etc. The technology may also be practiced in distributed computing environments where tasks are performed by remote-processing devices that are linked through a communications network.

With reference to FIG. 11, computing device 1100 includes bus 1102, which directly or indirectly couples the following devices: memory 1104, one or more processors 1106, one or more presentation components 1108, input/output (I/O) ports 1110, input/output components 1112, and illustrative power supply 1114. Bus 1102 represents what may be one or more buses (such as an address bus, data bus, or combination thereof). Although the various blocks of FIG. 11 are shown with lines for the sake of clarity, in reality, delineating various components is not so clear, and metaphorically, the lines would more accurately be grey and fuzzy. For example, one may consider a presentation component, such as a display device, to be an I/O component. Also, processors have memory. The inventors recognize that such is the nature of the art, and reiterate that the diagram of FIG. 11 is merely illustrative of an example computing device that can be used in connection with one or more embodiments of the present technology. Distinction is not made between such categories as "workstation," "server," "laptop," "handheld device," etc., as all are contemplated within the scope of FIG. 11 and with reference to "computing device."

Computing device 1100 typically includes a variety of computer-readable media. Computer-readable media can be any available media that can be accessed by computing device 1100 and includes both volatile and non-volatile media, and removable and non-removable media. By way of example, and not limitation, computer-readable media may comprise computer storage media and communication media. Computer storage media, also referred to as a communication component, includes both volatile and non-volatile, removable and non-removable media implemented in any method or technology for storage of information, such as computer-readable instructions, data structures, program modules, or other data. Computer storage media includes, but is not limited to, RAM (random-access memory), ROM (read-only memory), EEPROM (electrically erasable programmable read-only memory), flash memory, or other memory technology; CD (compact disc)-ROM, digital versatile disks (DVDs), or other optical disk storage; magnetic cassettes, magnetic tape, magnetic disk storage, or other magnetic storage devices; or any other medium that can be used to store the desired information and that can be accessed by computing device 1100. Computer storage media does not comprise signals per se.

Communication media typically embodies computer-readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, radio frequency (RF), infrared, and other wireless media. Combinations of any of the above should also be included within the scope of computer-readable media.

Memory 1104 includes computer storage media in the form of volatile or non-volatile memory. The memory may be removable, non-removable, or a combination thereof. Example hardware devices include solid-state memory, hard drives, optical-disc drives, etc. Computing device 1100 includes one or more processors that read data from various entities, such as memory 1104 or I/O components 1112. Presentation component(s) 1108 presents data indications to a user or other device. Example presentation components include a display device, speaker, printing component, vibrating component, etc.

I/O ports 1110 allow computing device 1100 to be logically coupled to other devices, including I/O components 1112, some of which may be built-in. Illustrative components include a microphone, joystick, game pad, satellite dish, scanner, printer, wireless device, etc. The I/O components 1112 may provide a natural user interface (NUI) that processes air gestures, voice, or other physiological inputs generated by a user. In some instances, inputs may be transmitted to an appropriate network element for further processing. An NUI may implement any combination of speech recognition, stylus recognition, facial recognition, biometric recognition, gesture recognition, both on screen and adjacent to the screen, as well as air gestures, head and eye tracking, or touch recognition associated with a display of computing device 1100. Computing device 1100 may be equipped with depth cameras, such as stereoscopic camera systems, infrared camera systems, RGB (red-green-blue) camera systems, touchscreen technology, other like systems, or combinations of these, for gesture detection and recognition. Additionally, the computing device 1100 may be equipped with accelerometers or gyroscopes that enable detection of motion. The output of the accelerometers or gyroscopes may be provided to the display of computing device 1100 to render immersive augmented reality or virtual reality. Power supply 1114 may supply power to 1100 or components thereof.

At a low level, hardware processors execute instructions selected from a machine language (also referred to as machine code or native) instruction set for a given processor. The processor recognizes the native instructions and performs corresponding low-level functions relating, for example, to logic, control, and memory operations. Low-level software written in machine code can provide more complex functionality to higher levels of software. As used herein, computer-executable instructions includes any software, including low-level software written in machine code; higher-level software, such as application software; and any combination thereof. Any other variations and combinations thereof are contemplated within embodiments of the present technology.

With reference back to FIG. 1, an example operating environment 100 in which aspects of the technology may be employed is provided. Among other components or engines not shown, operating environment 100 comprises server 102, client device 104, and database 106, which are communicating via network 108 to item listing generator 110.

Generally, server 102 is a computing device that implements functional aspects of operating environment 100, such as one or more functions of item listing generator 110. One suitable example of a computing device that can be employed as server 102 is described as computing device 1100 with respect to FIG. 11.

Client device 104 is generally a computing device, such as computing device 1100 of FIG. 11. Client device 104 may perform various functions described herein. In aspects, client device 104 may perform functions described with respect to item listing generator 110.

As with other components of FIG. 1, server 102 and client device 104 are each intended to represent one or more devices. In implementations, client device 104 is a client-side or front-end device, and server 102 represents a back-end or server-side device. It will be understood that some implementations of the technology will comprise either a client-side or front-end computing device, a back-end or server-side computing device, or both, executing any combination of functions for error detection and modification. FIG. 1 is simply one example illustration of a computing environment in which the technology may be employed, although it will be recognized that other arrangements of devices and functions may be used with the technology as well. All are intended to be within the scope of the present disclosure, as will be further noted.

Database 106 generally stores information, including data, computer instructions (e.g., software program instructions, routines, or services), or models used in embodiments of the described technologies. Although depicted as a single database component, database 106 may be embodied as one or more databases or may be in the cloud.

Network 108 may include one or more networks (e.g., public network or virtual private network [VPN]), as shown with network 108. Network 108 may include, without limitation, one or more local area networks (LANs), wide area networks (WANs), or any other communication network or method.

With continued reference to FIG. 1, it is noted and again emphasized that any additional or fewer components, in any arrangement, may be employed to achieve the desired functionality within the scope of the present disclosure. Although the various components of FIG. 1 are shown with lines for the sake of clarity, in reality, delineating various components is not so clear, and metaphorically, the lines may more accurately be grey or fuzzy. Although some components of FIG. 1 are depicted as single components, the depictions are intended as examples in nature and in number and are not to be construed as limiting for all implementations of the present disclosure. The functionality of operating environment 100 can be further described based on the functionality and features of its components. Other arrangements and elements (e.g., machines, interfaces, functions, orders, and groupings of functions, etc.) can be used in addition to or instead of those shown, and some elements may be omitted altogether.

Further, some of the elements described in relation to FIG. 1, such as those described with respect to item listing generator 110, are functional entities that may be implemented as discrete or distributed components or in conjunction with other components, and in any suitable combination and location. Various functions described herein are being performed by one or more entities and may be carried out by hardware, firmware, or software. For instance, various functions may be carried out by a processor executing computer-executable instructions stored in memory.

Referring to the drawings and description in general, having identified various components in the present disclosure, it should be understood that any number of components and arrangements might be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, or software. For instance, various functions may be carried out by a processor executing instructions stored in memory. As such, other arrangements and elements (e.g., machines, interfaces, functions, orders, and groupings of functions, etc.) can be used in addition to or instead of those shown.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the words "including," "having," and other like words and their derivatives have the same broad meaning as the word "comprising," and the word "accessing" comprises "receiving," "referencing," or "retrieving," or derivative s thereof. Further, the word "communicating" has the same broad meaning as the word "receiving" or "transmitting," as facilitated by software or hardware-based buses, receivers, or transmitters using communication media described herein.

In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (*a* or *b* thus includes either *a* or *b,* as well as *a* and *b*).

As further used herein, the term "train," when referring to training a machine learning model, may mean training an untrained model, further training a previously trained model, fine-tuning a pre-trained model, or the like. "Train" is intended to broadly cover methods of machine learning using a dataset.

For purposes of a detailed discussion above, embodiments of the present technology are described with reference to a distributed computing environment. However, the distributed computing environment depicted herein is merely an example. Components can be configured for performing novel aspects of embodiments, where the term "configured for" or "configured to" can refer to "programmed to" perform particular tasks or implement particular abstract data types using code. Further, while embodiments of the present technology may generally refer to the distributed data object management system and the schematics described herein, it is understood that the techniques described may be extended to other implementation contexts.

From the foregoing, it will be seen that this technology is one well-adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated by the accompanying drawings is to be interpreted as illustrative and not in a limiting sense.

Some example aspects that can be practiced from the foregoing description include the following:
Aspect 1: A computer-implemented method comprising: generating a canonicalized item graph from item listings populated with item listing data; training a graph neural network (GNN) on the canonicalized item graph to generate a trained GNN; receiving partial item listing data for a new item listing of a new item; prompting a large language model (LLM) to generate a synthetic item listing for the new item by predicting additional item listing data, the LLM prompt comprising the partial item listing data; employing the GNN to identify a modification to the synthetic item listing; determining whether the modification to the synthetic item listing satisfies an accuracy threshold for describing the new item; and generating a final item listing with item listing data for the new item, the item listing data for the final item listing determined based on whether the modification satisfies the accuracy threshold.
Aspect 2: Aspect 1, wherein the final item listing includes the modification based on the modification satisfying the accuracy threshold.
Aspect 3: Any of Aspects 1-2, wherein the final item listing omits the modification based on the modification not satisfying the accuracy threshold.
Aspect 4: Any of Aspects 1-3, wherein the canonicalized item graph comprises numerical representations of the item listings as nodes that are interconnected based on relationships between attributes of the item listings.
Aspect 5: Any of Aspects 1-4, wherein generating the canonicalized item graph comprises: representing categorized items as nodes of an item graph; and defining edges between the nodes of the item graph based on attributes of the categorized items as determined from item listing data.
Aspect 6: Aspect 5, wherein the attributes comprise one or more of a title, description, price, condition, category, or item feature for the item listings of the categorized items.
Aspect 7: Any of Aspects 1-6, wherein the modification comprises adding an additional attribute for the new item to the synthetic item listing.
Aspect 8: One or more computer storage media storing computer-executable instructions thereon that, when executed by a processor, cause the processor to perform a method comprising: generating a canonicalized item graph having nodes that correspond to categorized items, wherein the nodes are connected by edges representing relationships between attributes for the categorized items; training a graph neural network (GNN) on the canonicalized item graph to generate a trained GNN; accessing a new item listing of a new item; and employing the trained GNN to suggest a modification to the new item listing.
Aspect 9: Aspect 8, further comprising generating a final item listing that includes the modification.
Aspect 10: Any of Aspects 8-9, further comprising generating a final item listing that does not include the modification.
Aspect 11: Any of Aspects 8-10, further comprising employing a large language model (LLM) to predict at least a portion of the new item listing from received partial item listing data.
Aspect 12: Any of Aspects 8-11, wherein the nodes correspond to numerical representations of the categorized items.
Aspect 13: Any of Aspects 8-12, wherein the attributes comprise at least one or more of a title, description, price, condition, category, or item feature.
Aspect 14: Any of Aspects 8-13, wherein the modification is a recommended change of one attribute to another attribute.
Aspect 15: A system comprising: at least one processor; and one or more computer storage media storing computer-executable instructions thereon that, when executed by the at least one processor, cause the at least one processor to perform a method comprising: training a graph neural network (GNN) on a canonicalized item graph to generate a trained GNN, the canonicalized item graph having nodes that correspond to categorized items, wherein the nodes are connected by edges representing relationships between attributes of the categorized items; employing the GNN to recommend a modification to a synthetic item listing; and generating a final item listing from the synthetic item listing and the modification.
Aspect 16: Aspect 15, further comprising generating at least a portion of the synthetic item listing using a large language model (LLM) and partial item listing data.
Aspect 17: Any of Aspects 15-16, wherein the canonicalized item graph comprises a first node for an item in a first category and a second node for the item in a second category different from the first category.
Aspect 18: Any of Aspects 15-17, wherein the modification is recommended for an attribute of the synthetic item listing.
Aspect 19: Aspect 18, wherein the attribute is a title, description, price, condition, category, or item feature.
Aspect 20: Any of Aspects 15-19, wherein the modification is a recommended change from one attribute to another attribute.

## Claims

1. A computer-implemented method comprising:
generating a canonicalized item graph from item listings populated with item listing data;
training a graph neural network (GNN) on the canonicalized item graph to generate a trained GNN;
receiving partial item listing data for a new item listing of a new item;
prompting a large language model (LLM) to generate a synthetic item listing for the new item by predicting additional item listing data, the LLM prompt comprising the partial item listing data;
employing the GNN to identify a modification to the synthetic item listing;
determining whether the modification to the synthetic item listing satisfies an accuracy threshold for describing the new item; and
generating a final item listing with item listing data for the new item, the item listing data for the final item listing determined based on whether the modification satisfies the accuracy threshold.

2. The computer-implemented method of claim 1, wherein the final item listing includes the modification based on the modification satisfying the accuracy threshold;
or
wherein the final item listing omits the modification based on the modification not satisfying the accuracy threshold.

3. The computer-implemented method of claim 1 or 2, wherein the canonicalized item graph comprises numerical representations of the item listings as nodes that are interconnected based on relationships between attributes of the item listings.

4. The computer-implemented method of any one of the preceding claims, wherein generating the canonicalized item graph comprises:
representing categorized items as nodes of an item graph; and
defining edges between the nodes of the item graph based on attributes of the categorized items as determined from item listing data;
wherein, optionally, the attributes comprise one or more of a title, description, price, condition, category, or item feature for the item listings of the categorized items.

5. The computer-implemented method of any one of the preceding claims, wherein the modification comprises adding an additional attribute for the new item to the synthetic item listing.

6. One or more computer storage media storing computer-executable instructions thereon that, when executed by a processor, cause the processor to perform a method comprising:
generating a canonicalized item graph having nodes that correspond to categorized items, wherein the nodes are connected by edges representing relationships between attributes for the categorized items;
training a graph neural network (GNN) on the canonicalized item graph to generate a trained GNN;
accessing a new item listing of a new item; and
employing the trained GNN to suggest a modification to the new item listing.

7. The media of claim 6, further comprising generating a final item listing that includes the modification;
or
further comprising generating a final item listing that does not include the modification.

8. The media of claim 6 or 7, further comprising employing a large language model (LLM) to predict at least a portion of the new item listing from received partial item listing data.

9. The media of any one of claims 6 to 8, wherein the nodes correspond to numerical representations of the categorized items;
and/or
wherein the attributes comprise at least one or more of a title, description, price, condition, category, or item feature.

10. The media of any one of claims 6 to 9, wherein the modification is a recommended change of one attribute to another attribute.

11. A system comprising:
at least one processor; and
one or more computer storage media storing computer-executable instructions thereon that, when executed by the at least one processor, cause the at least one processor to perform a method comprising:
training a graph neural network (GNN) on a canonicalized item graph to generate a trained GNN, the canonicalized item graph having nodes that correspond to categorized items, wherein the nodes are connected by edges representing relationships between attributes of the categorized items;
employing the GNN to recommend a modification to a synthetic item listing; and
generating a final item listing from the synthetic item listing and the modification.

12. The system of claim 11, further comprising generating at least a portion of the synthetic item listing using a large language model (LLM) and partial item listing data.

13. The system of claim 11 or 12, wherein the canonicalized item graph comprises a first node for an item in a first category and a second node for the item in a second category different from the first category.

14. The system of claim any one of claims 11 to 13, wherein the modification is recommended for an attribute of the synthetic item listing;
wherein, optionally, the attribute is a title, description, price, condition, category, or item feature.

15. The system of any one of claims 11 to 14, wherein the modification is a recommended change from one attribute to another attribute.
